# EUROPEAN PATENT APPLICATION

(11) **EP 1 517 320 A2**
(43) Date of publication of application: **23.03.2005**
(21) Application number: 04007686.1
(22) Date of filing: 30.03.2004
(51) Int. Cl.: G11B 15/68, G11B 17/22

(54) **Inventory control device**

(30) Priority: 16.09.2003 US 665132
(71) Applicant: Hewlett-Packard Development Company, L.P., Houston, TX 77070 (US)
(72) Inventor: Reasoner, Kelly J., Fort Collins Colorado 80526 (US); Harmon, Duane L., Loveland Colorado 80537 (US); Schmidtke, Gregg S., Fort Collins Colorado 80524 (US)
(74) Representative: Schoppe, Fritz, Dipl.-Ing.

(57) **Abstract**

Inventory control devices and methods for controlling the inventory of a data storage system are disclosed. In one embodiment, the inventory control device comprises a latch (304) positioned in relation to an access device (120) of a data storage system (100) so that opening the access device causes the latch to move from a first position to a second position, a sensor (306) to sense a latch state indicating the position of the latch, and control logic (220) communicatively coupled to the sensor to cause the data storage system to inventory one or more storage locations associated with the access device if the sensor indicates the latch is in the second position and to cause the data storage system to not inventory the one or more storage locations if the sensor indicates the latch is in the first position.

## Description

### Background of the Invention

Data storage systems, such as tape libraries, are used to store and retrieve data storage devices from locations within the data storage system so that data may be written to or read from the data storage device. Typically, the storage systems are used to store magnetic data cartridges. However, other types of data storage devices may be stored in other embodiments of data storage systems.

Since the contents and/or arrangement of the data cartridges may change, most data storage systems include an inventory system that may be used for keeping track of the presence, locations, and identities of the various data cartridges. Access to the data cartridges within the data storage system may be locked when the data storage system is operational. However, if the data storage system is shut down intentionally or unintentionally (e.g., power failure), an operator or other user may gain access to the cartridges. Since data cartridges could have been exchanged, removed, or added while the data storage system was shut down, an inventory of the cartridges must be performed after the system has been restarted. The inventory is time consuming and may not be necessary most of the time.

### Summary of the Invention

In one embodiment, an inventory control device is disclosed. The inventory control device comprises a latch positioned in relation to an access device of a data storage system so that opening the access device causes the latch to move from a first position to a second position. A sensor senses a latch state indicating the position of the latch. The inventory control device also comprises control logic communicatively coupled to the sensor. The control logic causes the data storage system to inventory one or more storage locations associated with the access device if the sensor indicates the latch is in the second position. The control logic causes the data storage system to not inventory the one or more storage locations if the sensor indicates the latch is in the first position.

### Brief Description of the Drawings

Illustrative embodiments of the invention are illustrated in the drawings in which:

FIG. 1 illustrates a front perspective view of a data storage system including an inventory control device;

FIG. 2 illustrates a rear perspective view of the data storage system of FIG. 1;

FIG. 3A illustrates a latch in a first position that may be used to control inventory of the data storage system of FIGS. 1 and 2;

FIG. 3B illustrates the latch of FIG. 3A in a second position;

FIG. 3C illustrates a close-up view of the latch of FIG. 3B; and

FIG. 4 illustrates a method that may be used to control inventory of the data storage system of FIGS. 1-2 during system start.

### Detailed Description

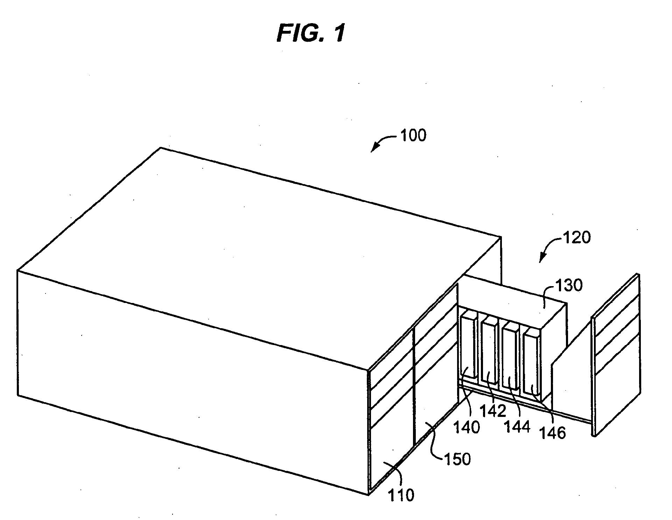

An exemplary data storage system with an inventory control device is illustrated in FIGS. 1 - 3. By way of example, the data storage system may be a library used to store data cartridges. The data storage system 100 includes a plurality of storage locations to hold data storage devices (e.g., data cartridges) 140-146. One or more access devices 110, 120 allows users or system operators to gain access to the data storage devices 140-146 associated with an access device 120.

As illustrated in FIG. 1, the access device 120 may be a data storage drawer. The data storage drawer may hold a cartridge magazine 130 that includes one or more storage locations to hold data storage devices 140-146. If the data storage drawer is opened, the user has access to data storage devices 140-146 included in the drawer 120, but does not have access to the data storage devices included in drawer 110. It should be appreciated that alternate embodiments may include additional or fewer data storage drawers 110, 120. Additionally, data storage drawers may each include additional cartridge magazines 130 or alternately may use another mechanism to store data storage devices.

Alternative access devices are also contemplated. By way of example, an access device 120 may be a door to a data storage device through which the user may enter and gain access to all of the storage locations within the data storage device. Access devices may also be doors or other mechanisms that allow a user to gain access to a subset or all of the data storage locations within the data storage system 100.

Data storage system 100 also includes a control panel 150. The control panel may be used to display information to a user. It may also be used to hold controls to the library, such as a power or reset button. In alternate embodiments, data storage system 100 may not include control panel 150.

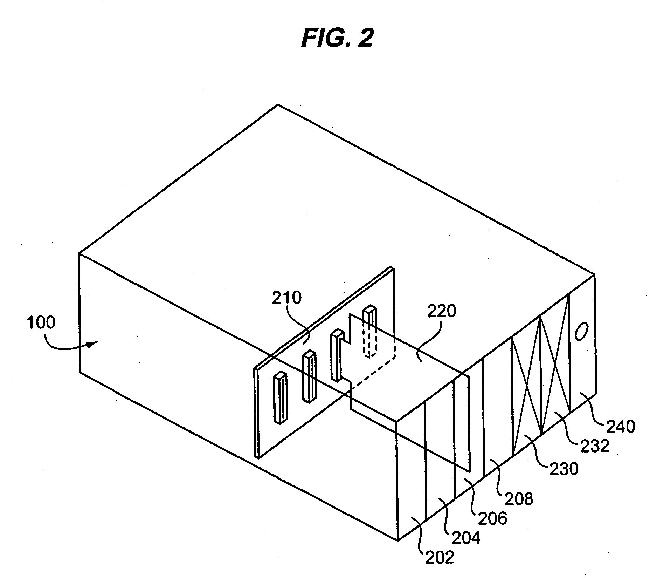

As shown in FIG. 2, data storage system may also include one or more read/write devices (e.g., tape drives) 230, 232 and a power supply 240. Data storage system may also include a plurality of card slots 202, 204, 206, 208. The card slots may be used to hold circuit cards used to manage and control the data storage system and/or devices within the data storage system 100. One of the slots 206 may hold control logic 220 which may contain circuitry used to control the data storage system 100. By way of example, control logic 220 may be a circuit card, such as a library control card, connected to a back plane 210 of the data storage system. In alternate embodiments, the control logic may be implemented in a different manner than that illustrated in FIG. 2.

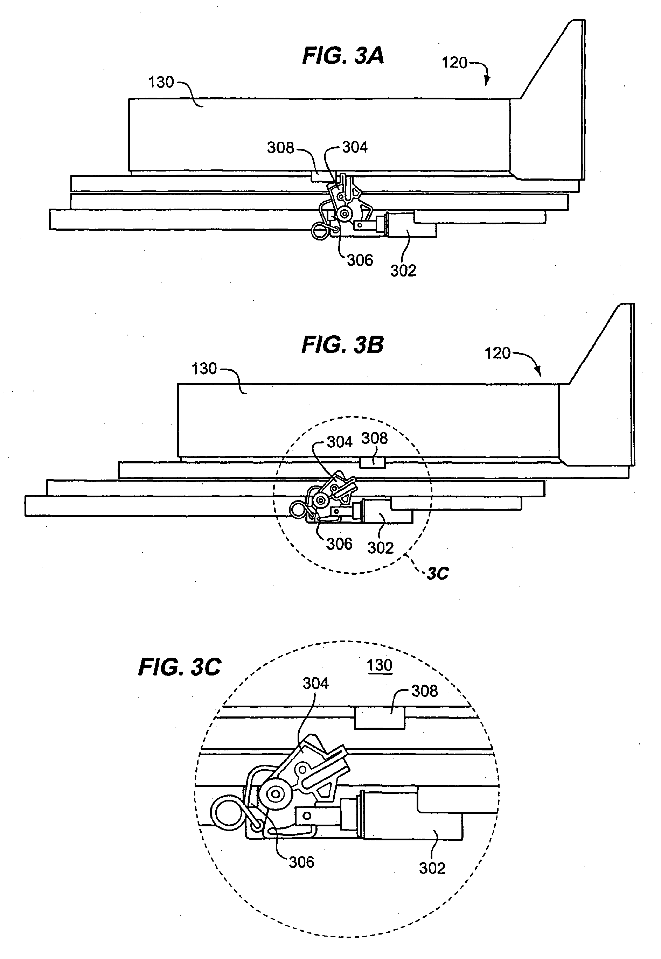

Control logic 220 is communicatively coupled to a sensor 306, such as an optical interrupter, that senses a state indicating the position or movement of a mechanical device, such as a latch 304. As illustrated by FIGS. 3A N3C, the latch 304 is positioned in relation to access device 120 so that opening access device 120 causes the latch to move from a first position (shown in FIG. 3A) to a second position (shown in FIGS. 3B and 3C). By way of example, the latch may be moved from the first position to the second position by a flag 308 on access device 120. In other embodiments, alternate features or methods may be used to move the latch 304 from the first position to the second position when access device 120 is opened or partially opened.

The latch may stay in the second position until it is moved back to the first position by actuator 302. By way of example, actuator may be a solenoid or motor. It should be appreciated that alternate embodiments may use a different type of latch 304 or sensor 306 than that shown in FIGS. 3A and 3B. Additionally, data storage system 100 may include additional latches associated with additional access devices to indicate if the associated access device has been opened.

The latch state indicating the position of the latch 304 is communicated to control logic 220. Control logic 220 may then use this information to determine if the access device 120 was opened while the data storage system 100 was shut down. Data storage system may have been shut down due to a power off, power failure, restart, or other condition that caused the data storage system to be inoperative. If the latch has been moved to the second state, control logic may cause the actuator 302 to move the latch back from the second position to the first position.

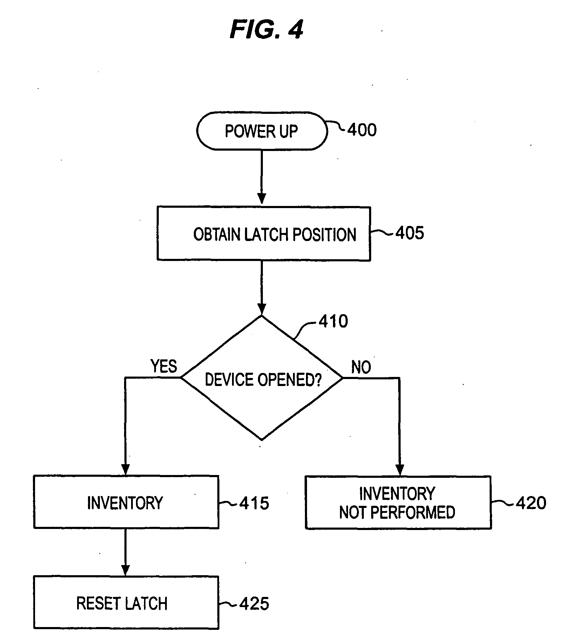

As will be explained with reference to FIG. 4, control logic 220 may use the position of the latch to determine whether to inventory one or more storage locations associated with access device 120. After the system is started or restarted 400, control logic 220 obtains 405 the position of the latch 304. By way of example, control logic 220 may obtain the position of the latch by obtaining the latch state indicating the position of the latch by means of sensor 306. The position of the latch 304 state indicates if the access device 120 was opened while the data storage system 100 was shut down.

If the access device was opened 410, users may have rearranged, added, or moved data storage devices within the one or more storage locations associated with the access device. Thus, control logic 220 may cause an inventory to be performed 415 on these storage locations. Storage locations associated with access devices that were not opened during system shutdown or that could not have been accessed when the access device 120 was opened during system shutdown may or may not be inventoried. At any time after obtaining the position of the latch indicating the access device was opened, control logic may also cause actuator 302 or other mechanism to return the latch 304 to the position indicating the access device was not opened.

If the access device was not opened 410, the data storage devices were probably not added, moved, or rearranged within the one or more storage locations associated with the access device 120. Consequently, it is not necessary to inventory the one or more storage locations associated with access device 120. Therefore, an inventory on the one or more storage locations is not performed 425.

In one embodiment, the inventory may be performed by moving a cartridge access device to each of the storage locations that may have been accessed when access device 120 was opened so that the cartridge access device can read bar code labels of the data storage devices contained therein. The inventory list may then be updated with the information obtained from the inventory of the storage locations. Other methods of performing the inventory may also be used.

If the latch state does not indicate the access device was opened, it is not necessary to inventory the one or more storage locations associated with access device 120. Therefore, an inventory on the one or more storage locations is not performed 420. It should be appreciated that the process illustrated in FIG. 4 may be performed for each access device having an associated latch indicating if the access device was opened.

## Claims

1. An inventory control device comprising:
a latch (304) positioned in relation to an access device (120) of a data storage system (100) so that opening the access device causes the latch to move from a first position to a second position;
a sensor (306) to sense a latch state indicating the position of the latch; and
control logic (220) communicatively coupled to the sensor, to cause the data storage system to inventory one or more storage locations associated with the access device if the sensor indicates the latch is in the second position and to cause the data storage system to not inventory the one or more storage locations if the sensor indicates the latch is in the first position.

2. The device of claim 1, wherein the access device comprises a data storage drawer.

3. The device of claim 2, wherein the storage locations comprise data cartridge locations within the data storage drawer.

4. The device of any of claims 1-3, further comprising an actuator (302) to move the latch from the second position to the first position, the control logic to cause the actuator to move the latch from the second position to the first position.

5. The device of claim 4, wherein the actuator comprises a solenoid.

6. The device of any of claims 1-5, wherein the sensor comprises an optical interrupter.

7. A method comprising:
obtaining (405) a position of a latch, the position of the latch indicating if an access device of a data storage system was opened while the data storage system was shut down;
causing the data storage system to perform an inventory (415) on one or more storage locations associated with the access device if the position of the latch indicates the access device was opened (410); and
causing the data storage system to not perform the inventory (420) on the one or more storage locations if the position of the latch indicates the access device was not opened (410).

8. The method of claim 7, further comprising if the position of the latch indicates the access device was opened, causing the latch to return to the position indicating the access device was not opened.

9. The method of claims 7or 8, wherein obtaining the position of the latch comprises obtaining a latch state indicating the position of the latch by means of a sensor.

10. A data storage system comprising:
an access device (120);
a plurality of data cartridges (140, 142, 144, 146) disposed in the access device;
a mechanical device moveable between first and second positions, the mechanical device positioned in relation to the access device so that opening the access device causes the mechanical device to change position; and
control logic (220) coupled to the mechanical device, to sense movement of the mechanical device and to initiate inventory of the data cartridges if the position of the mechanical device indicates the access device was opened while the data storage system was shut down.
